# EUROPÄISCHE PATENTSCHRIFT

(11) **EP 1 509 418 B1**
(45) Veröffentlichungstag und Bekanntmachung des Hinweises auf die Patenterteilung: **12.12.2007**
(21) Anmeldenummer: 03722286.6
(22) Anmeldetag: 17.04.2003
(51) Int. Cl.: B60K 15/04, F16L 9/12

(54) **EINFÜLLROHR**
FILLER TUBE
TUBE DE REMPLISSAGE

(30) Priorität: 05.06.2002 DE 10225081
(43) Veröffentlichungstag der Anmeldung: 02.03.2005
(73) Patentinhaber: Kautex Textron GmbH & Co. KG., 53229 Bonn (DE)
(72) Erfinder: WOLF, Hartmut, 53757 Sankt Augustin (DE)
(74) Vertreter: Kierdorf, Theodor
(86) Internationale Anmeldenummer: PCT/DE2003/001298
(87) Internationale Veröffentlichungsnummer: WO 2003/104013

(56) Entgegenhaltungen:
- DE-C- 4 405 409
- DE-U- 29 719 911
- FR-A- 2 772 679

## Beschreibung

Die Erfindung betrifft ein Einfüllrohr aus Kunststoff für einen Kraftstoffbehälter eines KFZ, mit Mitteln zur Ableitung etwaiger füllbedingter elektrostatischer Aufladungen über geerdete Anschlussbauteile des KFZ.

Insbesondere bei der Betankung von Kunststoff-Kraftstoffbehältern, aber auch bei der Betankung von Metall-Kraftstoffbehältern mit Kunststoff-Einfüllrohr, treten aufgrund der Reibung des einströmenden Kraftstoffs elektrostatische Aufladungen der mit dem Kraftstoffstrom in Berührung befindlichen Teile auf. Diese elektrostatischen Aufladungen des Kraftstoffbehälters im Bereich des Einfüllstutzens sind grundsätzlich unerwünscht. Elektrostatische Aufladungen können besonders in denjenigen Bereichen des Einfüllstutzens auftreten, in welchen der bei der Betankung aus dem Zapfventil austretende Kraftstoffstrom auftrifft und zerplatzt. Dieser hinsichtlich elektrostatischer Aufladungen kritische Prallbereich ist normalerweise hinter einer Krümmung des Einfüllstutzens gelegen.

Elektrostatische Aufladungen bei der Betankung sind umso problematischer, je höher die Füllgeschwindigkeit bei der Betankung ist. Auch kritisch sind elektrostatische Aufladungen bei der Erstbefüllung eines Kraftstoffbehälters, da im Behälter mehr Luftsauerstoff vorhanden ist, sodass ein zündfähiges Gemisch aus Kraftstoffdampf und Sauerstoff vorhanden ist.

Es sind zahlreiche Bemühungen bekannt, elektrostatische Aufladungen während der Betankung abzuleiten.

Aus der DE 195 36 509 A1 ist beispielsweise ein Einfüllstutzen für einen Kraftstoffbehälter aus Kunststoff bekannt, der einen metallenen Endkragen aufweist, an welchem ein Metalldraht fixiert ist, der an der Innenwandung des Einfüllstutzens anliegt und zum Ableiten elektrostatischer Aufladungen dient. Der Endkragen steht mit der Karosserie des Kraftfahrzeugs in metallischer Verbindung. Der Metalldraht wird durch eine Fahrradspeiche oder dergleichen gebildet. Bei Einfüllrohren mit verhältnismäßig einfachem Krümmungsverlauf oder bei Einfüllrohren mit geringem Durchmesser wird eine solche "Erdungsspeiche" genügen, um zuverlässig elektrostatische Aufladungen im Einfüllrohr zu verhindern. Um elektrostatische Aufladungen auch in solchen Einfüllrohren zu verhindern, die einen komplizierten Krümmungsverlauf oder einen besonders großen Durchmesser aufweisen, wird die Verwendung einer "Erdungsspeiche" zur Ableitung elektrostatischer Aufladungen im Einfüllrohr als nicht ausreichend angesehen. Das kann beispielsweise daran liegen, dass die "Erdungsspeiche" nicht vollständig dem Krümmungsverlauf des Einfüllrohrs folgen kann und somit beispielsweise nicht zuverlässig elektrostatische Aufladungen im Prallbereich des Einfüllrohrs ableitet, d. h. in demjenigen Bereich, in dem der Kraftstoffstrahl aus der Zapfpistole erstmalig auf die Wandung des Einfüllrohrs auftrifft.

Darüber hinaus ist es bekannt, den Mündungsbereich des Einfüllrohrs elektrisch leitend auszubilden, beispielsweise mittels leitfähiger Kragen aus Metall oder Kunststoff. Hierdurch wird allerdings eine elektrostatische Ableitung nur im oberen und äußeren Bereich des Einfüllrohrs gewährleistet.

Es ist bereits darüber nachgedacht worden, den gesamten Einfüllstutzen elektrisch leitfähig auszubilden, beispielsweise als mehrschichtiges Extrusionsblasformteil mit einer elektrisch leitenden Schicht. Eine solche Anordnung ist aber verhältnismäßig teuer und bringt herstellungsbedingt Einschränkungen bei der Formgebung des Bauteils mit.

Aus der FR2772679 ist ein Einfüllrohr gemäß Oberbegriff des Anspruchs 1 bekannt, bei dem sich ein elektrisch leitfähiges Innenrohr über eine Teillänge des Einfüllrohrs erstreckt. Im Kragen des Einführrohrs ist ebenfalls eine Erdungsweiche vorgesehen, die einerseits mit einer Verschlusskappe des Einfüllrohrs und andererseits mit dem elektrisch leitfähigen Innenrohr elektrisch leitend verbunden ist. Die Erdungsspeiche ist so angeordnet, dass die in das Einfüllrohr eingeschobenen Zapfpistole beim Füllvorgang gegen die Erdungsspeiche anliegt.

Aus der DE29719911U ist ebenfalls ein Einfüllrohr aus Kunststoff für einen Kraftstoffbehälter eines KFZ mit Mitteln zur Ableitung etwaiger füllbedingter elektrostatischer Aufladungen über geerdete Anschlussbauteile des KFZ bekannt, wobei das Einfüllrohr ebenso ein elektrisch leitfähiges Innenrohr aufweist, welches durch Extrusionsblasformen hergestellt wurde (Oberbegriff von Anspruch 1), wobei der gesamte Einfüllstutzen elektrisch leitfähig ausgebildet ist. Das Einfüllrohr ist als mehrschichtiges Extrusionsblasformteil mit einer elektrisch leitenden Schicht ausgeführt. Wie vorstehend bereits beschrieben wurde, ist eine solche Anordnung verhältnismäßig teuer und bringt herstellungsbedingt Einschränkungen bei der Formgebung des Bauteils mit sich.

Der Erfindung liegt daher die Aufgabe zugrunde, ein Einfüllrohr der eingangs genannten Art mit verhältnismäßig einfachen Mitteln so auszubilden, dass elektrostatische Aufladungen zuverlässig abgeleitet werden können.

Die Aufgabe wird durch ein Einfüllrohr der eingangs genannten Art gelöst, welches sich dadurch auszeichnet, dass das Einfüllrohr ein elektrisch leitfähiges Innenrohr aufweist, das durch Extrusionsblasformen hergestellt wurde und sich wenigstens über eine Teillänge des Einfüllrohrs erstreckt.

Durch Verwendung eines solchen Innenrohrs kann gezielt eine elektrische Ableitung im Bereich der größten Ladungstrennung zwischen dem fließenden Kraftstoff und der Innenwand des Einfüllrohrs vorgenommen werden, beispielsweise dort, wo der Kraftstoffstrahl aus der Zapfpistole erstmalig auf die Innenwand des Einfüllrohrs trifft. Bei Verwendung eines im Verhältnis zu dem Einfüllrohr dünnwandigen Innenrohrs, das insbesondere wegen seiner geringen Wandstärke flexibel ausgebildet ist, kann das Innenrohr über eine große Länge des Einfüllrohrs dem Krümmungsverlauf desselben folgen.

Das Innenrohr wird zweckmäßigerweise separat hergestellt und anschließend in das Einfüllrohr eingebracht.

Zweckmäßigerweise ist das Innenrohr dem Einfüllrohr querschnittlich angepasst, somit bleibt die funktionale Querschnittsgestaltung des Einfüllrohrs erhalten. Um die Montage des Innenrohrs in dem Einfüllrohr zu erleichtern, kann das Innenrohr axial und/oder radial gefaltet und/oder gewellt ausgebildet sein. Hierdurch ist sichergestellt, dass das Innenrohr querschnittlich an das Außenrohr anpassbar ist und beispielsweise durch engere Querschnittsbereiche des Außenrohrs in dieses eingebracht werden kann. Hierzu kann das Einfüllrohr auch in Richtung seiner Längserstreckung geschlitzt ausgebildet sein.

Das Innenrohr ist im Bereich dessen Mündung fixiert. Hierzu ist ein elektrisch leitfähiger Kragen vorgesehen, mit welchem das Innenrohr elektrisch leitend verbunden ist. Der leitfähige Kragen ist zweckmäßigerweise dann mit einem leitfähigen Anschlussbauteil des KFZ verbunden.

Bei einer bevorzugten Variante des Einfüllrohrs gemäß der Erfindung ist der Kragen mit der Mündung des Einfüllrohrs und der Mündung des Innenrohrs verschweißt.

Der Kragen kann beispielsweise als elektrisch leitfähiges Kunststoff-Spritzgussteil ausgebildet sein.

Als elektrisch leitfähiger Kunststoff sowohl zur Herstellung des Innenrohrs als auch beispielsweise zur Herstellung des Kragens kommt ein HDPE mit einer Kohlenstofffüllung von vorzugsweise zwischen 10 bis 12% bezogen auf das Gewicht in Betracht.

Die Erfindung wird nachstehend anhand eines in den Zeichnungen dargestellten Ausführungsbeispiels erläutert.

Es zeigen:
- Fig. 1: einen Längsschnitt durch eine vereinfachte schematische Darstellung des Einfüllrohrs gemäß der Erfindung,
- Fig. 2: einen Querschnitt entlang der Linien II-II in Fig. 1,
- Fig. 3: einen Querschnitt durch das Einfüllrohr entlang der Linien III-III in Fig. 1,
- Fig. 4: einen vergrößerten Teilschnitt einer Variante des Einfüllrohrs und
- Fig. 5: einen vergrößerten Teilschnitt einer dritten Variante des Einfüllrohrs.

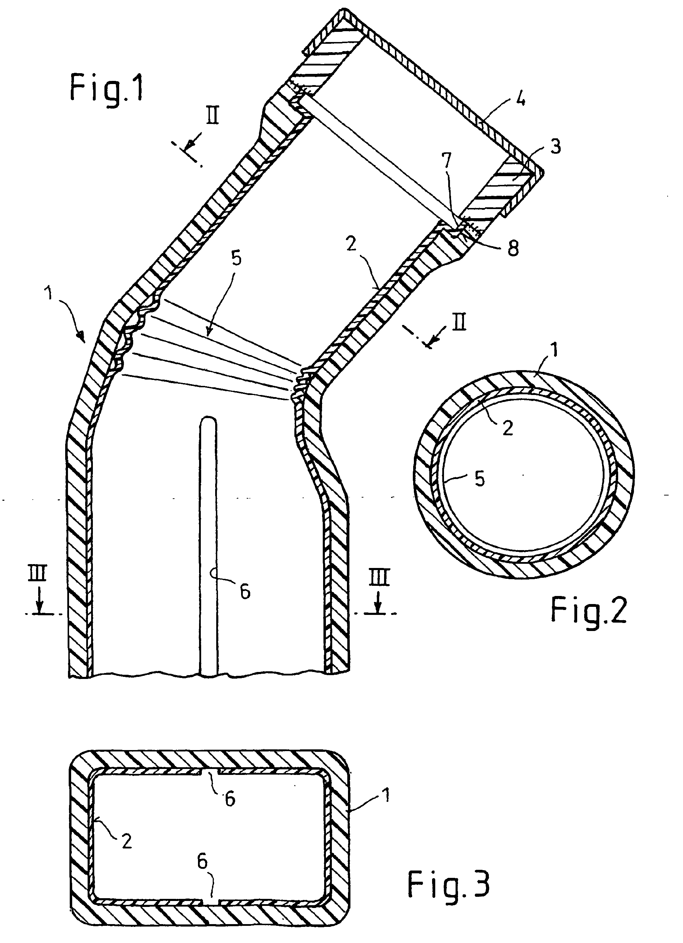

Fig. 1 zeigt stark vereinfacht ein Teilstück eines Einfüllrohrs 1 aus Kunststoff für einen Kraftstoffbehälter aus Kunststoff. Das Einfüllrohr 1 besteht ebenfalls überwiegend aus Kunststoff und ist in den Kraftstoffbehälter eingesetzt und mit diesem verschweißt.

Wie aus den Figuren ersichtlich ist, ist in das Einfüllrohr ein verhältnismäßig dünnwandiges Innenrohr 2 eingesetzt, welches in einem separaten Arbeitsgang hergestellt wurde, und zwar durch Extrusionsblasformen aus einem elektrisch leitfähigen Kunststoff. Dünnwandig im vorstehend beschriebenen Sinne bedeutet dünnwandig im Verhältnis zur Wandstärke des Einfüllrohrs 1. Eine typische Wandstärke für das Einfüllrohr beträgt mehr als drei Millimeter, in diesem Fall kann die Wandstärke des Innenrohrs 2 weniger als einen Millimeter betragen.

Wie nachstehend noch beschrieben wird, ist das Innenrohr 2 in gewissen Grenzen flexibel ausgebildet, sodass dieses querschnittlich an den Innenquerschnitt des Einfüllrohrs 1 anpassbar ist. Als leitfähiger Kunststoff für das Innenrohr 2 kommt beispielsweise ein HDPE (High Density Polyethylen) mit einer Kohlenstofffüllung, vorzugsweise zwischen 10 und 12% bezogen auf das Gewicht in Betracht. Das Einfüllrohr 1 kann ebenfalls als extrusionsblasgeformtes Rohr ausgebildet sein.

Das Innenrohr 2 ist mit dem Einfüllrohr 1 über einen Kragen 3 verbunden, der ebenfalls aus elektrisch leitfähigem Kunststoff besteht. Der Kragen 3 ist als Kunststoff-Spritzgussteil ausgebildet. Dessen Wandstärke ist größer als die Wandstärke von Einfüllrohr 1 und Innenrohr 2 zusammen. Der Kragen 3 bildet die Einfüllöffnung des Einfüllrohrs 1, also dessen Mündung und ist mit einem elektrisch leitfähigen Teil der Karosserie des KFZ verbunden. Schließlich ist der Kragen 3 mit einem nur andeutungsweise dargestellten Deckel 4 nach außen verschlossen.

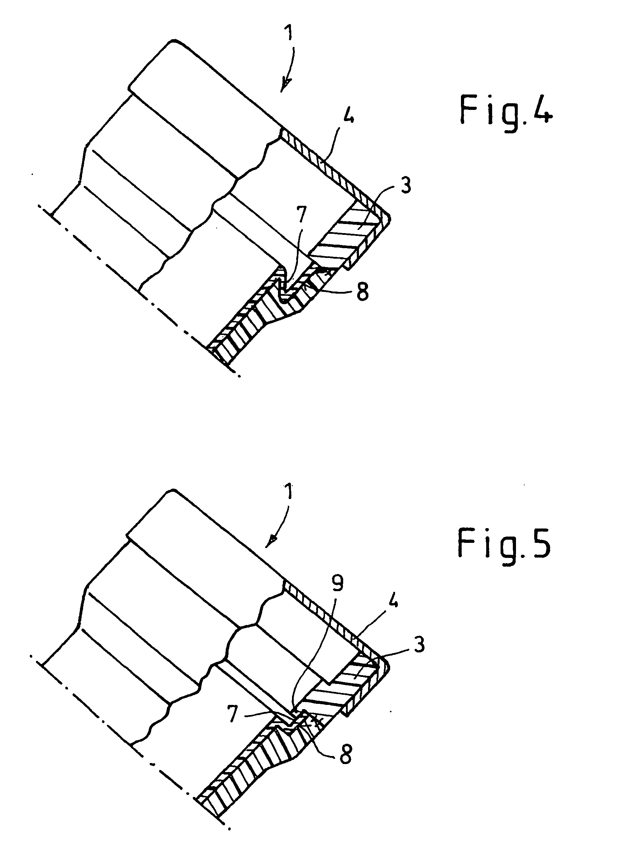

Das Innenrohr 2 ist an seinem einfüllseitigen Ende mit einem flanschartig ausgebildeten Rand 7 versehen, der auf einem innen umlaufenden Absatz 8 des Einfüllrohrs 1 aufliegt. Bei der in Figur 4 dargestellten Variante des Einfüllrohrs 1 ist der einfüllseitig vorgesehene Absatz 8 mit einer Hinterschneidung, d. h. mit radial auswärts gerichtetem Gefälle versehen, so dass das Innenrohr 2 beim Einsetzen in das Einfüllrohr 1 unter Krafteinwirkung in Einfüllrichtung mit seinem flanschartig ausgebildeten Rand 7 in die Hinterschneidung des Absatzes 8 hineingezogen wird. Hierdurch wird einerseits eine.Zentrierung und Fixierung des Innenrohrs 2 im Einfüllrohr 1 bewirkt, andererseits wird die Wandung des Innenrohrs 2 in dem betreffende Bereich radial auswärts gedrückt, wodurch bei Verschweißung des Innenrohrs 2 mit dem Kragen gewährleistet ist, dass sich die Wandung des Innenrohrs nicht in den Querschnitt desselben hervorstehend radial einwärts bewegt.

Als zusätzliche oder ergänzende Maßnahme zur Vermeidung einer solchen Einwärtsbewegung der einfüllseitigen Stirnseite des Innenrohrs 2 kann der mit diesem und dem Einfüllrohr 1 zu verschweißende Kragen 3 mit einer innen umlaufenden Schürze 9 versehen sein, wie dies in Figur 5 dargestellt ist. Eine solche Schürze 9 an dem Kragen 3 kann alternativ oder auch zusätzlich zu der in Figur 4 dargestellten Maßnahme vorgesehen sein.

Wie besonders der Fig. 1 zu entnehmen ist, besitzt das Innenrohr 2 im Bereich der Krümmung des Einfüllrohrs 1 einen Faltenbalg-Abschnitt 5, der eine gewisse Biegbarkeit des Innenrohrs 2 in diesem Bereich gewährleistet.

Bei dem gewählten Ausführungsbeispiel sind sowohl das Innenrohr 2 als auch das Einfüllrohr 1 über ihre Länge mit verschiedenen Querschnitten versehen. Das Einfüllrohr 1 und das Innenrohr 2 besitzen im Mündungsbereich einen runden Querschnitt, wie aus Fig. 2 ersichtlich ist; in dem in Strömungsrichtung des einfließenden Kraftstoffs betrachtet stromabwärts gelegene Prallbereich (hinter dem Faltenbalg-Abschnitt 5) besitzen das Einfüllrohr 1 als auch das Innenrohr 2 einen rechteckigen Querschnitt, wie aus Fig. 3 ersichtlich ist. Im Bereich des rechteckigen Querschnitts ist das Innenrohr an diametral gegenüberliegenden Seiten mit Längsschlitzen 6 versehen, die eine Anpassbarkeit des Querschnitts des Innenrohrs 2 an den Innenquerschnitte des Einfüllrohrs 1 in diesem Bereich gewährleisten, so dass das Innenrohr 2 einfüllseitig, d. h. in der Zeichnung von oben, in das Einfüllrohr 1 einsetzbar ist. Die Längsschlitze 6 ermöglichen es, den größten Querschnitt des Innenrohrs 2 wenigstens auf das Innenmaß des kleinsten Querschnitts des Einfüllrohrs 1 zusammenzuschieben. Diese Längsschlitze 6 sind als Materialausnehmungen ausgebildet, alternativ ist es aber auch möglich, Längsfalten in diesem Bereich des Innenrohrs 2 vorzusehen.

Die gesamte Ausbildung des Innenrohrs 2 ermöglicht es, letzteres in Fig. 1 in das Einfüllrohr 1 einzuschieben, wobei durch die Dünnwandigkeit des Innenrohrs und die zusätzlichen Maßnahmen wie Vorsehen eines Faltenbalg-Abschnitts 5 sowie von Längsschlitzen 6 die querschnittliche Anpassbarkeit des Innenrohrs 2 an das Einfüllrohr 1 gewährleistet ist.

### Bezugszeichenliste

- 1: Einfüllrohr
- 2: Innenrohr
- 3: Kragen
- 4: Deckel
- 5: Faltenbalg-Abschnitt
- 6: Längsschlitz
- 7: Rand
- 8: Absatz
- 9: Schürze

## Patentansprüche

1. Einfüllrohr aus Kunststoff für einen Kraftstoffbehälter eines KFZ, mit Mitteln zur Ableitung etwaiger füllbedingter elektrostatischer Aufladungen über geerdete Anschlussbauteile des KFZ, wobei das Einfüllrohr (1) ein elektrisch leitfähiges Innenrohr (2) aufweist, das durch Extrusionsblasformen hergestellt wurde und sich über wenigstens eine Teillänge des Einfüllrohres (1) erstreckt, **dadurch gekennzeichnet, dass** ein elektrisch leitfähiger, die Einfüllöffnung des Einfüllrohres (1) bildender Kragen (3) vorgesehen ist, mit welchem das Innenrohr (2) elektrisch leitend verbunden ist.

2. Einfüllrohr nach Anspruch 1, **dadurch gekennzeichnet, dass** das Innenrohr (2) dem Einfüllrohr (1) querschnittlich angepasst ist.

3. Einfüllrohr nach einem der Ansprüche 1 oder 2, **dadurch gekennzeichnet, dass** das Innenrohr (2) wenigstens in Teilbereichen axial und/oder radial gefaltet und/oder gewellt ist.

4. Einfüllrohr nach einem der Ansprüche 1 bis 3, **dadurch gekennzeichnet, dass** das Einfüllrohr (1) in Richtung seiner Längserstreckung geschlitzt ist.

5. Einfüllrohr nach einem der Ansprüche 1 bis 4, **dadurch gekennzeichnet, dass** das Innenrohr (2) im Bereich seiner Mündung fixiert ist.

6. Einfüllrohr nach Anspruch 1, **dadurch gekennzeichnet, dass** der Kragen (3) mit der Mündung des Einfüllrohres (1) und der Mündung des Innenrohres (2) verschweißt ist.

7. Einfüllrohr nach Anspruch 6, **dadurch gekennzeichnet, dass** der Kragen (3) als elektrisch leitfähiges Kunststoff-Spritzgussteil ausgebildet ist.

8. Einfüllrohr nach einem der Ansprüche 1 bis 7, **dadurch gekennzeichnet, dass** als elektrisch leitfähiger Kunststoff ein HDPE mit einer Kohlenstofffüllung von vorzugsweise zwischen 10 und 12% bezogen auf das Gewicht vorgesehen ist.

## Claims

1. Feed tube made of plastics material for a fuel tank of a motor vehicle, comprising means for diverting possible filling-induced electrostatic charges via earthed connection components of the motor vehicle, the feed tube (1) having an electrically conductive inner tube (2) formed by extrusion blow-moulding and extending over at least a portion of the length of the feed tube (1), **characterised in that** there is provided an electrically conductive collar (3) which forms the feed opening of the feed tube (1) and which is electrically conductively connected to the inner tube (2).

2. Feed tube according to claim 1, **characterised in that** the cross-section of the inner tube (2) is adapted to the cross-section of the feed tube (1).

3. Feed tube according either claim 1 or claim 2, **characterised in that** the inner tube (2) is, at least in portions, axially and/or radially folded and/or corrugated.

4. Feed tube according to any one of claims 1 to 3, **characterised in that** the feed tube (1) is slit in the direction of the longitudinal extension thereof.

5. Feed tube according to any one of claims 1 to 4, **characterised in that** the inner tube (2) is fixed in the region of the opening thereof.

6. Feed tube according to claim 1, **characterised in that** the collar (3) is welded to the opening of the feed tube (1) and the opening of the inner tube (2).

7. Feed tube according to claim 6, **characterised in that** the collar (3) is formed as an electrically conductive plastics material injection-moulded part.

8. Feed tube according to any one of claims 1 to 7, **characterised in that** an HDPE comprising a carbon filler of preferably between 10 and 12 % by weight is provided as the electrically conductive plastics material.

## Revendications

1. Tube de remplissage en matière plastique pour un réservoir de carburant destiné à un véhicule automobile, avec des moyens servant à évacuer des décharges électrostatiques éventuelles liées au remplissage, par l'intermédiaire de composants de raccordement, mis à la terre, du véhicule automobile, le tube de remplissage (1) présentant un tube intérieur (2) électroconducteur, fabriqué par extrusion soufflage et s'étendant sur au moins une longueur partielle du tube de remplissage (1), **caractérisé en ce qu'**il est prévu un collet (3) électroconducteur, formant l'ouverture de remplissage du tube de remplissage (1) et avec lequel le tube intérieur (2) est relié de façon électrocondutrice.

2. Tube de remplissage selon la revendication 1, **caractérisé en ce que** le tube intérieur (2) est adapté, en ce qui concerne sa section, au tube de remplissage (1).

3. Tube de remplissage selon la revendication 1 ou 2, **caractérisé en ce que** le tube intérieur (2) est plié et/ou ondulé axialement et/ou radialement au moins dans des zones partielles.

4. Tube de remplissage selon l'une quelconque des revendications 1 à 3, **caractérisé en ce que** le tube de remplissage (1) est fendu dans le sens de son étendue longitudinale.

5. Tube de remplissage selon l'une quelconque des revendications 1 à 4, **caractérisé en ce que** le tube intérieur (2) est fixé dans la zone de son embouchure.

6. Tube de remplissage selon la revendication 1, **caractérisé en ce que** le collet (3) est soudé avec l'embouchure du tube de remplissage (1) et l'embouchure du tube intérieur (2)

7. Tube de remplissage selon la revendication 6, **caractérisé en ce que** le collet (3) est réalisé en tant que pièce moulée par injection en matière plastique électrocondutrice.

8. Tube de remplissage selon l'une quelconque des revendications 1 à 7, **caractérisé en ce qu'**il est prévu, en tant que matière plastique électrocondutrice, un PEHD avec une charge en carbone s'élevant, de préférence, entre 10 et 12 % , par rapport au poids.
